# FASCICULE DE BREVET EUROPEEN

(11) **EP 3 417 230 B1**
(45) Date de publication et mention de la délivrance du brevet: **04.12.2019**
(21) Numéro de dépôt: 17701727.4
(22) Date de dépôt: 30.01.2017
(51) Int. Cl.: F28F 27/02, F28D 20/00, F28D 20/02

(54) **SYSTEME ET PROCEDE DE STOCKAGE ET DE RESTITUTION DE LA CHALEUR COMPRENANT UN LIT DE PARTICULES ET DES MOYENS DE REGULATION THERMIQUE**
SYSTEM UND VERFAHREN ZUR SPEICHERUNG UND ABGABE VON WÄRME MIT EINEM BETT AUS PARTIKELN UND THERMISCHER EINSTELLVORRICHTUNG
SYSTEM AND METHOD FOR STORING AND RELEASING HEAT COMPRISING A BED OF PARTICLES AND THERMAL REGULATION MEANS

(30) Priorité: 19.02.2016 FR 1651353
(43) Date de publication de la demande: 26.12.2018
(73) Titulaire: IFP Energies nouvelles, 92500 Rueil-Malmaison (FR)
(72) Inventeur: SANZ, Elena, 69340 Francheville (FR); NASTOLL, Willi, 69007 Lyon (FR); PLAIS, Cecile, 69420 Les Haies (FR)
(86) Numéro de dépôt international: PCT/EP2017/051931
(87) Numéro de publication internationale: WO 2017/140481

(56) Documents cités:
- WO-A1-2013/015834
- WO-A1-2016/001000

## Description

La présente invention concerne le domaine du stockage et de la restitution de chaleur, en particulier pour le stockage de la chaleur dans un système ou un procédé de type AACAES (de l'anglais « Advanced Adiabatic - Compressed Air Energy Storage »). WO 2013/015834 divulgue un système de stockage et de restitution de chaleur selon le préambule de la revendication 1.

Dans un système de stockage d'énergie par air comprimé (CAES), l'énergie, que l'on souhaite utiliser à un autre moment, est stockée sous forme d'air comprimé. Pour le stockage, une énergie, notamment électrique, entraîne des compresseurs d'air, et pour le déstockage, l'air comprimé entraîne des turbines, qui peuvent être reliées à une génératrice électrique. Le rendement de cette solution n'est pas optimal car une partie de l'énergie de l'air comprimé se retrouve sous forme de chaleur qui n'est pas utilisée. En effet, dans les procédés CAES, on n'utilise que l'énergie mécanique de l'air, c'est-à-dire qu'on rejette toute la chaleur produite lors de la compression. A titre d'exemple, de l'air comprimé à 8 MPa (80 bar) se réchauffe pendant la compression jusqu'à environ 150°C, mais il est refroidi avant le stockage. De plus, le rendement d'un système CAES n'est pas optimal, car ensuite le système nécessite de chauffer l'air stocké pour réaliser la détente de l'air. En effet, si l'air est stocké à 8 MPa (80 bar) et à température ambiante et si l'on désire récupérer l'énergie par une détente, la décompression de l'air suit à nouveau une courbe isentropique, mais cette fois à partir des conditions initiales de stockage (environ 8 MPa et 300 K soit environ 27°C). L'air se refroidit donc jusqu'à des températures non réalistes (83 K soit -191°C). Il est donc nécessaire de le réchauffer, ce qui peut se faire à l'aide d'un brûleur à gaz, ou autre carburant.

Plusieurs variantes existent actuellement à ce système. On peut citer notamment les systèmes et procédés :
- ACAES (de l'anglais « Adiabatic Compressed Air Energy Storage ») dans lequel l'air est stocké à haute température due à la compression. Toutefois, ce type de système nécessite un système de stockage spécifique, volumineux et coûteux (stockage adiabatique).
- AACAES (de l'anglais « Advanced Adiabatic Compressed Air Energy Storage ») dans lequel l'air est stocké à température ambiante, et la chaleur due à la compression est également stockée, séparément, dans un système de stockage de la chaleur TES (de l'anglais « Thermal Energy Storage »). La chaleur stockée dans le TES est utilisée pour chauffer l'air avant sa détente. Selon certaines conceptions envisagées, la chaleur est stockée dans le système de stockage au moyen de particules solides.

Par ailleurs, de tels systèmes d'échange de chaleur sont utilisés dans d'autres domaines : le stockage de l'énergie solaire, marine, dans les procédés de métallurgie, etc.

Un des critères de design des systèmes d'échange et de stockage de chaleur est leur capacité à contrôler la stratification thermique (ou thermocline) des faibles températures vers des températures élevées. En effet, le rendement et l'efficacité de stockage de la chaleur en dépendent.

Dans ce but, plusieurs types de système d'échange de chaleur ont été développés. Certains types de système d'échange de chaleur concernent un lit fixe de particules solides, un lit mobile de particules solides, dans lequel des échanges thermiques de fluides circulant à co-courant, etc.. Cependant, ces échanges de chaleur ne sont pas optimaux en termes d'efficacité et de rendement.

Par exemple, la demande de brevet FR2990502 concerne un réservoir de stockage de chaleur à stratification thermique améliorée. Pour ce système de stockage de la chaleur, l'échange de chaleur est réalisé au moyen d'une matrice de particules solides réparties en plusieurs étages de lit fixe, et d'un fluide caloporteur traversant les espaces entre les étages. Cette conception permet une homogénéisation de la température dans le système de stockage. Toutefois, ce système ne permet pas un bon maintien du gradient thermique dans la cuve.

Selon un autre exemple décrit dans la demande de brevet WO 2013015834, le système consiste à commander le transfert du gaz entre différents lits fixes ou différentes cuves, lorsque la température de sortie du gaz est inférieure à un seuil, c'est-à-dire lorsqu'une certaine quantité de chaleur a été stockée dans le lit fixe. Toutefois, ce système est encombrant, et ne semble pas optimal en termes d'efficacité.

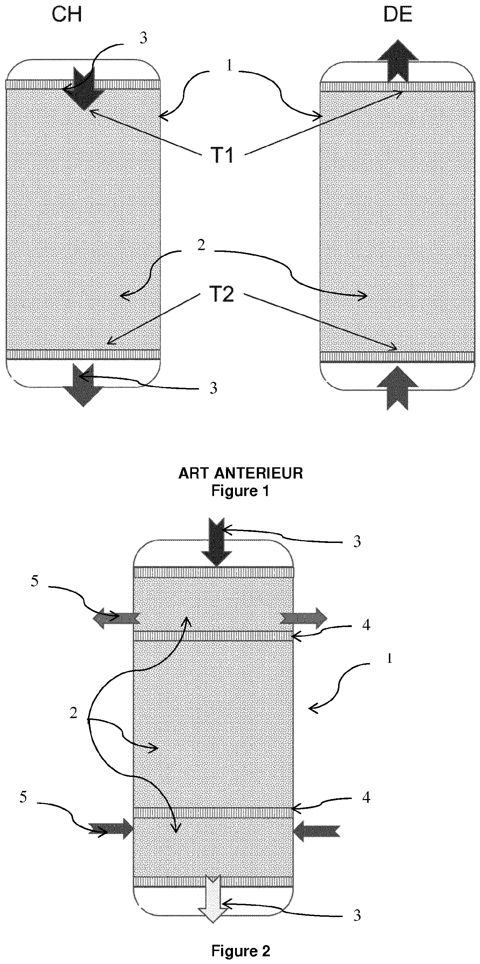

La figure 1 illustre un système de stockage et de restitution de la chaleur 1 classique selon l'art antérieur, lors d'une phase de charge (stockage) CH, et lors d'une phase de décharge (restitution) DE. Ce système de stockage et de restitution de la chaleur 1 a sensiblement une forme de colonne qui comporte un lit fixe de particules 2, et des moyens d'injection et/ou soutirage 3 du fluide qui va échanger de la chaleur avec les particules. Selon cette configuration, pour la charge, le fluide entre chaud, à une température T1, par le haut de la colonne, et sort froid (refroidi par les particules qui stockent une partie de la chaleur du fluide), à une température T2 (T2<T1), par le fond de la colonne. Pour la décharge, le fluide entre froid, à une température T2, par le fond de la colonne, et sort chaud (chauffé par les particules qui restituent une partie de la chaleur des particules), à une température T1. Pour ce mode de réalisation de l'art antérieur, aucune température n'est imposée au lit de particules, par conséquent, ces températures dérivent au cours du temps, ce qui ne permet pas une efficacité optimale du système de stockage et de restitution de la chaleur.

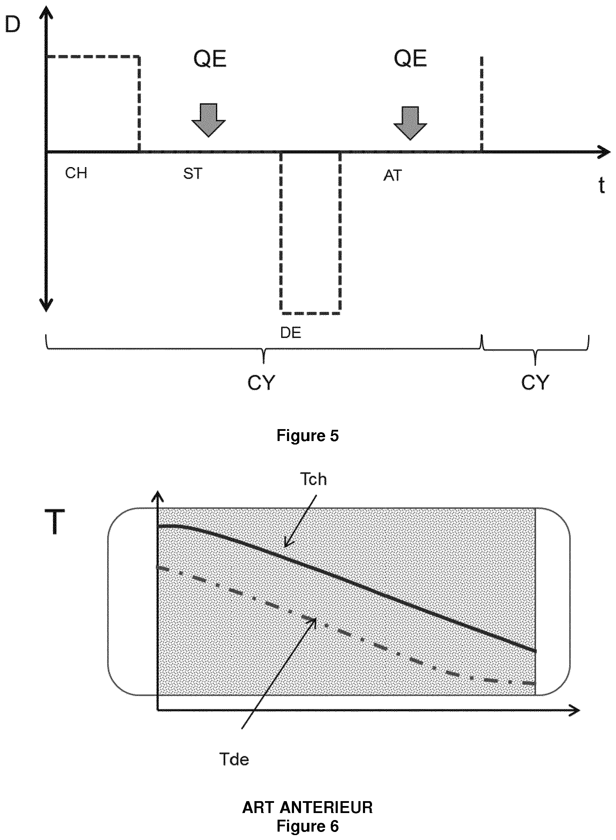

La figure 6 présente le profil thermique « type » du système de stockage et de restitution de la chaleur (TES) en lit fixe de particules, illustré en figure 1. Sur cette figure, le « côté chaud » (entrée et sortie du fluide chaud) est à gauche, et le « côté froid » (entrée et sortie du fluide froid) est à droite. Sur cette figure, la courbe Tch en trait continu correspond au profil de la température pendant la charge, et la courbe Tde, en traits pointillés, représente le profil de la température pendant la décharge. Un gradient s'établit entre les deux côtés du TES, mais ce gradient se déplace le long du lit de particules pendant les cycles de charge et de décharge. Il existe ainsi une variation dans le niveau de température dans le côté chaud (et dans le côté froid) en fonction du temps (phase dans le cycle). Dans la phase de décharge, le fluide ne peut donc pas récupérer toute l'énergie stockée, et pendant la phase de charge le fluide en sortie du TES ne se refroidit pas assez. De plus, ce phénomène s'amplifie avec le temps, le gradient ayant tendance à s'aplatir jusqu'à atteindre un état semi-stationnaire. La conséquence de ce phénomène est une diminution dans l'efficacité globale du système (on récupère moins d'énergie). De plus, dans le cas de l'utilisation du système de stockage et de restitution de la chaleur pour un procédé de type AACAES, on constate également une diminution de la stabilité du procédé AACAES, qui doit opérer avec des températures d'entrée dans la turbine et dans le système de stockage de l'air comprimé qui sont variables. Ainsi, l'efficacité des turbines et des compresseurs du procédé du type AACAES est réduite, car elle est fonction de la température d'entrée.

Pour pallier ces inconvénients, la présente invention concerne un système de stockage et de restitution de la chaleur comprenant au moins un lit de particules de stockage de la chaleur. Le système comporte en outre, à chaque extrémité du lit fixe, un moyen de régulation thermique des particules. Ainsi, il est possible de réguler la température aux entrées/sorties du lit fixe, ce qui permet un bon maintien du gradient thermique dans le lit fixe, assurant de cette manière un meilleur transfert thermique lors de la charge ou de la décharge de la chaleur.

### Le système et le procédé selon l'invention

L'invention concerne un système de stockage et de restitution de la chaleur comprenant au moins un lit de particules de stockage de la chaleur, et des moyens d'injection et de soutirage d'un fluide dans ledit lit de particules. Ledit système de stockage et de restitution de la chaleur comporte à chaque extrémité dudit lit de particules un moyen de régulation thermique desdites particules.

Selon un mode de réalisation de l'invention, ledit système de stockage comporte un premier moyen de régulation thermique apte à chauffer lesdites particules à une première extrémité dudit lit de particules, et un deuxième moyen de régulation thermique apte à refroidir lesdites particules à une deuxième extrémité dudit lit de particules.

Selon une mise en œuvre, ledit moyen de régulation thermique comporte des moyens de chauffage et/ou de refroidissement desdites particules.

Selon un aspect, lesdits moyens de chauffage et lesdits moyens de refroidissement des premier et deuxième moyens de régulation thermique sont reliés au moyen d'un dispositif de pompe à chaleur.

Conformément à une conception, lesdits moyens de chauffage et/ou de refroidissement desdites particules comprennent un échangeur de chaleur et/ou une résistance électrique et/ou des moyens de circulation d'un fluide thermique.

Selon une variante, lesdits moyens de chauffage et/ou de refroidissement sont situés au sein dudit lit de particules.

Alternativement, lesdits moyens de chauffage et/ou de refroidissement sont situés en périphérie dudit lit de particules.

Conformément à une caractéristique, ledit lit fixe comporte une couche de matériau isolant thermique, au sein dudit lit de particules, délimitant ledit moyen de régulation thermique.

Avantageusement, ledit système de stockage et de restitution de la chaleur comporte des moyens de mesure de la température desdites particules.

De préférence, ledit fluide est un gaz, notamment de l'air.

De manière avantageuse, lesdites particules sont des particules de matériau à changement de phase.

En outre, l'invention concerne un système de stockage et de récupération d'énergie par gaz comprimé comportant au moins un moyen de compression du gaz), au moins un moyen de stockage de gaz comprimé, au moins un moyen de détente dudit gaz comprimé pour générer une énergie, et au moins un système de stockage et de restitution de la chaleur selon l'une des caractéristiques précédentes.

De plus, l'invention concerne un procédé de stockage de chaleur, qui comporte les étapes suivantes :
a) on fait circuler un fluide dans un lit de particules de stockage de la chaleur d'un système de stockage et de restitution de la chaleur selon l'une des caractéristiques précédentes ; et
b) on stocke une partie de la chaleur dudit fluide dans lesdites particules, et on régule la température desdites particules à au moins une extrémité dudit lit de particules.

Par ailleurs, l'invention concerne un procédé de restitution de la chaleur, qui comporte les étapes suivantes :
a) on stocke de la chaleur dans un lit de particules de stockage de la chaleur d'un système de stockage et de restitution de la chaleur selon l'une des caractéristiques précédentes, en régulant la température desdites particules à au moins une extrémité dudit lit de particules ; et
b) on fait circuler un fluide dans ledit lit de particules pour restituer ladite chaleur desdites particules audit fluide.

En outre, l'invention concerne un procédé de stockage et de récupération d'énergie par gaz comprimé, qui comprend les étapes suivantes au moyen d'un système de stockage et de récupération d'énergie par gaz comprimé selon les caractéristiques précédentes :
a) on comprime un gaz ;
b) on refroidit un gaz dans un système de stockage et de restitution de la chaleur ;
c) on stocke ledit gaz refroidi ;
d) on chauffe ledit gaz refroidi dans ledit système de stockage et de restitution de la chaleur ; et
e) on détend ledit gaz comprimé chauffé pour générer une énergie.

Selon un mode de réalisation, entre les étapes de refroidissement du gaz et de chauffage du gaz, on régule la température à au moins une extrémité dudit lit de particules.

Conformément à une mise en œuvre, à l'étape b), on régule la température de dudit lit de particules en chauffant lesdites particules à l'extrémité dudit lit de particules par laquelle ledit gaz est sorti.

Avantageusement, à l'étape d), on régule la température dudit lit de particules en refroidissant lesdites particules à l'extrémité dudit lit de particules par laquelle ledit gaz est sorti.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1, déjà décrite, illustre un système de stockage et de restitution de la chaleur selon l'art antérieur, pour une phase de charge et pour une phase de décharge.
La figure 2 illustre un système de stockage et de restitution de la chaleur selon un premier mode de réalisation de l'invention.
La figure 3 illustre un système de stockage et de restitution de la chaleur selon un deuxième mode de réalisation de l'invention.
La figure 4 illustre un système de stockage et de restitution de la chaleur selon un troisième mode de réalisation de l'invention.
La figure 5 illustre un cycle d'utilisation d'un système de stockage et de restitution de chaleur selon un mode de réalisation de l'invention.
Les figures 6 et 7 représentent la thermocline au sein d'un système de stockage de chaleur, à la fin de la charge et à la fin de la décharge, respectivement pour un système de stockage selon l'art antérieur et selon l'invention.
La figure 8 illustre un système de stockage et de récupération d'énergie par gaz comprimé selon un mode de réalisation de l'invention.

### Description détaillée de l'invention

La présente invention concerne un système de stockage et de restitution de la chaleur. Selon l'invention, le système de stockage et de restitution de la chaleur comprend au moins un lit de particules de stockage de la chaleur. Le système selon l'invention permet de stocker la chaleur provenant d'un fluide chaud, le stockage étant réalisé par les particules de stockage de la chaleur. Le système permet également de restituer la chaleur stockée dans les particules à un fluide froid. On appelle lit de particules, un ensemble de particules agencées de manière aléatoires. Le lit de particules peut être fixe, mobile, ou fluidisé.

Les particules solides de stockage de la chaleur permettent le passage du fluide dans le lit de particules, et lors de ce passage, la chaleur est échangée entre le fluide et les particules. Ce passage du fluide dans le lit de particules peut être axial ou radial. Pour le passage du fluide dans le lit de particules, le système comporte des moyens d'injection et de soutirage du fluide. De préférence, ces moyens d'injection et de soutirage sont prévus à chaque extrémité du système de stockage et de restitution de la chaleur, de manière à ce que le fluide traverse le lit.

Conformément à l'invention, le système de stockage et de restitution de la chaleur comporte à chaque extrémité un moyen de régulation thermique des particules. Ainsi, il est possible de contrôler la température des particules à chaque extrémité du lit. Chaque moyen de régulation thermique assure une régulation thermique d'une portion des particules du lit. Ce contrôle de la température permet une optimisation du stockage de la chaleur, en imposant une température aux particules, par exemple après la charge ou la décharge du système de stockage et de restitution de la chaleur. Ainsi, l'efficacité et le rendement du système de stockage et de restitution de la chaleur sont optimisés.

Selon une première mise en œuvre, le système de stockage et de restitution de la chaleur comprend un lit fixe de particules. On appelle lit fixe, un agencement de particules de stockage de chaleur, dans lequel les particules sont immobiles.

Selon une deuxième mise en œuvre, le système de stockage et de restitution de la chaleur comprend un lit mobile de particules. On appelle lit mobile, un agencement de particules de stockage de chaleur, dans lequel les particules se déplacent dans une même direction.

Selon une troisième mise en œuvre, le système de stockage et de restitution de la chaleur comprend un lit fluidisé de particules. Un lit fluidisé est constitué d'une phase solide composé d'une phase fluide en écoulement et de particules mises en suspension par la phase fluide. Par exemple, la phase fluide peut être gazeuse, sous forme d'air ou de gaz rare. La phase fluide peut être injectée à une extrémité de la zone d'échange de chaleur, à proximité de l'entrée (injection) des particules pour former le lit fluidisé. Dans le cas pour lequel l'invention utilise une technologie « lit fluidisé », le système de stockage et de restitution de la chaleur peut comprendre plusieurs lits fluidisés « en série », chaque lit fluidisé en entrée/sortie comprend un système de régulation thermique, qui régule la température de l'ensemble du lit fluidisé.

Selon un mode de réalisation de l'invention, le système de stockage de la chaleur possède une forme de révolution, c'est-à-dire ayant un axe de symétrie : cylindrique, conique, tronconique, etc., de préférence le moyen de stockage de la chaleur est sensiblement de forme cylindrique (colonne). Selon un mode de réalisation de l'invention, le moyen de stockage de la chaleur peut comporter une pluralité de lits de particules de stockage de la chaleur. Ces lits de particules peuvent former un agencement étagé : les lits sont alors disposés les uns au-dessus des autres, et peuvent être séparés par des couches de matériau isolant thermique. Selon une mise en œuvre de l'invention, le lit de particules peut avoir une forme sensiblement cylindrique ou annulaire.

Conformément à une mise en œuvre de l'invention, le système de stockage et de restitution de la chaleur est sensiblement vertical. Alternativement, le système de stockage et de restitution de la chaleur est sensiblement horizontal.

Selon une variante de réalisation de l'invention, le système d'échange de chaleur selon l'invention peut comprendre des particules solides ou des particules sous forme de capsules contenant un matériau à changement de phase (MCP). Ces matériaux permettent également une réduction du volume des éventuels moyens de stockage, car ils permettent de stocker une grande quantité d'énergie sous la forme de chaleur latente. Un compromis entre efficacité et coût peut également être trouvé en mélangeant des MCP et des matériaux de stockage, utilisant la chaleur sensible pour stocker la chaleur, dans le lit de particules. Parmi les matériaux à changement de phase, on peut utiliser les matériaux suivants : les paraffines, dont la température de fusion est inférieure à 130°C, les sels qui fondent à des températures supérieures à 300°C, des mélanges (eutectiques) qui permettent d'avoir une large gamme de température de fusion.

Les particules solides (qu'elles soient ou non à changement de phase) peuvent avoir toutes les formes connues des milieux granulaires classiques (billes, cylindres, extrudés, trilobes ...), ainsi que toute autre forme permettant de maximiser la surface d'échange avec le gaz. De préférence, les particules sont sous la forme de billes, de manière à limiter les problèmes d'attrition. La taille de particules peut varier entre 0.02 mm et 50 mm, de manière préférée entre 0.5 et 20 mm, et de manière encore plus préférée entre 1 et 10 mm.

Conformément à une variante de réalisation de l'invention, le fluide peut être un gaz, notamment de l'air. Le fluide peut être un gaz à refroidir ou à chauffer par les particules dans le lit de particules. Alternativement, le fluide peut être un liquide.

Selon un mode préféré de réalisation de l'invention, le système de stockage et de restitution de la chaleur comporte un premier moyen de régulation thermique apte à refroidir les particules à une première extrémité du lit de particules, et un deuxième moyen de régulation thermique apte à chauffer les particules à l'autre extrémité du lit de particules. De préférence, la première extrémité correspond au côté (appelé « côté chaud »), par lequel entre et/ou sort le fluide chaud du lit fixe, et la deuxième extrémité correspond au côté (appelé « côté froid »), par lequel entre et/ou sort le gaz froid du lit fixe. Le premier moyen de régulation thermique peut être mis en œuvre notamment après la charge du système de stockage et de restitution de la chaleur. Le deuxième moyen de régulation thermique peut être mis en œuvre notamment après de la décharge du système de stockage et de restitution de la chaleur. Ainsi, Il est possible d'éviter un étalement du gradient de température au sein du lit de particules, ce qui assure un bon maintien du gradient thermique dans le système de stockage et de restitution de la chaleur. De cette manière, il est possible d'optimiser le transfert thermique lors de la charge et de la décharge du système de stockage et de restitution de la chaleur. Ceci est particulièrement important vis-à-vis du maintien de l'efficacité du système au cours des différents cycles de charge et décharge, car le système de stockage doit permettre d'assurer une température constante en entrée du système de stockage de l'air comprimé (ou du compresseur dans le cas d'un procédé AACAES avec plusieurs étapes de compression) dans les phases de charge, et en entrée de la turbine de détente pendant les phases de décharge.

De manière alternative et/ou complémentaire, le système de stockage et de restitution de la chaleur comporte un premier moyen de régulation thermique apte à chauffer les particules à une première extrémité du lit de particules, et un deuxième moyen de régulation thermique apte à refroidir les particules à l'autre extrémité du lit de particules. De préférence, la première extrémité correspond au côté (appelé « côté chaud »), par lequel entre et/ou sort le fluide chaud du lit fixe, et la deuxième extrémité correspond au côté (appelé « côté froid »), par lequel entre et/ou sort le gaz froid du lit fixe.

De manière à maintenir la température régulée par les moyens de régulation thermique, le lit de particules peut comprendre au moins une couche de matériau isolant thermique, cette couche délimitant la portion du lit de particules correspondant au moyen de régulation thermique. Ces couches d'isolant thermique permettent de limiter la diffusion de la température entre les extrémités du lit de particules et le centre du lit de particules, et donc améliorent le contrôle du gradient thermique. Le matériau isolant peut être tout matériau à très faible conductivité thermique connu, c'est-à-dire plus isolant que le lit comprenant les particules. Cette couche de matériau isolant thermique peut être perméable au fluide, afin de permettre son passage au travers de la couche.

Des moyens de mesure de la température peuvent être prévus dans le lit de particules. Les moyens de mesure de la température peuvent être placés aux extrémités du lit de particules. Ces moyens de mesure de la température peuvent être utilisés pour la régulation thermique des particules disposées aux extrémités du lit de particules.

De manière avantageuse, les moyens de régulation thermique peuvent comprendre des moyens de chauffage et/ou refroidissement desdites particules. Ces moyens de chauffage et/ou refroidissement peuvent comprendre un échangeur de chaleur et/ou une résistance électrique et/ou des moyens de circulation d'un fluide thermique, etc.. On appelle fluide thermique, un fluide circulant dans une portion du lit de particules ayant pour but de refroidir ou de réchauffer des particules. Ce fluide thermique est différent du fluide qui circule dans le lit de particules pour son chauffage ou son refroidissement. Le fluide thermique peut être de l'air, de l'eau, de la vapeur d'eau ou tout fluide permettant un bon échange de chaleur.

Ces moyens de chauffage et/ou refroidissement peuvent être situés au sein de lit de particules, de manière à optimiser le transfert thermique. Alternativement, les moyens de chauffage et/ou de refroidissement peuvent être situés en périphérie du lit de particules, de manière à ne pas entraver la circulation du fluide échangeant la chaleur. Dans ce cas, les moyens de chauffage/et ou de refroidissement peuvent être situés entre la colonne et le lit de particules.

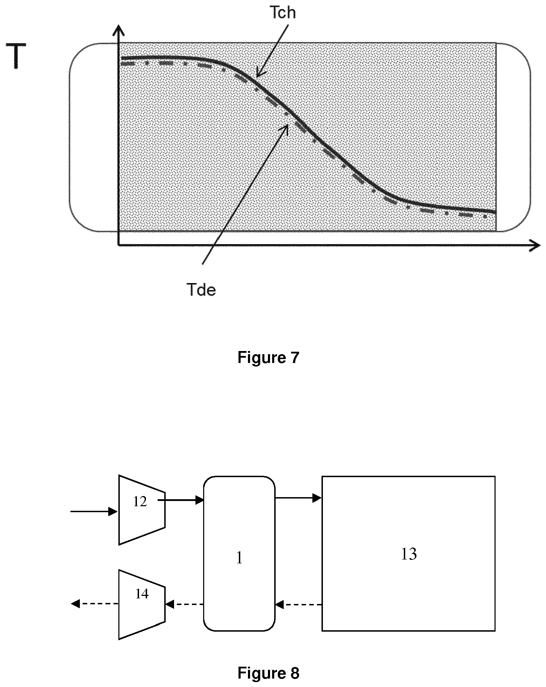

La figure 7 est une vue similaire à la figure 6. Cette figure présente le profil thermique « type » d'un système de stockage et de restitution de la chaleur (TES) en lit fixe de particules, selon l'invention. Sur cette figure, le « côté chaud » (entrée et sortie du fluide chaud) est à gauche, et le « côté froid » (entrée et sortie du fluide froid) est à droite. Sur cette figure, la courbe Tch en trait continu correspond au profil de la température pendant la charge, et la courbe Tde, en traits pointillés, représente le profil de la température pendant la décharge. Grâce aux moyens de régulation thermique, la température est quasiment constante au niveau des extrémités du lit fixe. De plus, contrairement au gradient thermique représenté en figure 6, le gradient thermique est plus raide, et les profils de température dans les phases de charge et de décharge sont plus rapprochés. Ainsi, les échanges de chaleur entre le fluide et les particules sont plus efficaces.

Selon une mise en œuvre de l'invention, les moyens de régulation thermique peuvent être mis en œuvre notamment lors des phases de stockage (après une étape de charge), et/ou lors d'une étape d'attente (après une décharge).

La figure 2 illustre, de manière non limitative, un système de stockage et de restitution de la chaleur 1 selon un premier mode de réalisation de l'invention. Le système de stockage 1 est formé d'une colonne verticale, qui comprend un lit fixe de particules 2. La colonne comprend par ailleurs, à ses deux extrémités, des moyens d'injection et de soutirage 3 d'un fluide dans la colonne. En outre, la colonne comprend des moyens de circulation 5 d'un fluide thermique (c'est-à-dire différent du fluide à chauffer ou à refroidir), afin d'assurer la régulation thermique des particules aux extrémités du lit de particules 2. Par exemple, un fluide thermique chaud peut être injecté en haut de la colonne par les moyens d'injection et de soutirage 3, et peut être collecté par le des moyens de circulation 5 situés en périphérie de la colonne, à une petite distance du haut de la colonne. De plus, un fluide thermique froid peut être injecté par des moyens de circulation 5 situés en périphérie de la colonne, à une petite distance du fond de la colonne, peut être extrait de la colonne par des moyens d'injection et de soutirage 3 en fond de la colonne. En outre, le lit de particules 2 comporte deux couches de matériau isolant thermique 4. Les couches 4 délimitent trois portions du lit de particules 2 : une première à l'extrémité supérieure du lit fixe délimitée par le haut de la colonne et une première couche d'isolant thermique 4, une deuxième au centre du lit fixe entre les deux couches d'isolant thermique 4, et une troisième à l'extrémité inférieure du lit fixe délimitée par une couche d'isolant thermique 4 et le fond de la colonne. Ces couches de matériau isolant thermique permettent d'isoler thermiquement les portions du lit de particules, dans lesquelles le chauffage et le refroidissement des particules sont prévus. Ainsi, il est possible de maintenir le gradient thermique souhaité.

Selon une variante du mode de réalisation, le système de stockage et de restitution de la chaleur peut comprendre aucune ou une seule couche de matériau isolant thermique.

Par ailleurs, le lit fixe peut être remplacé par un lit mobile ou une pluralité de lits fluidisés.

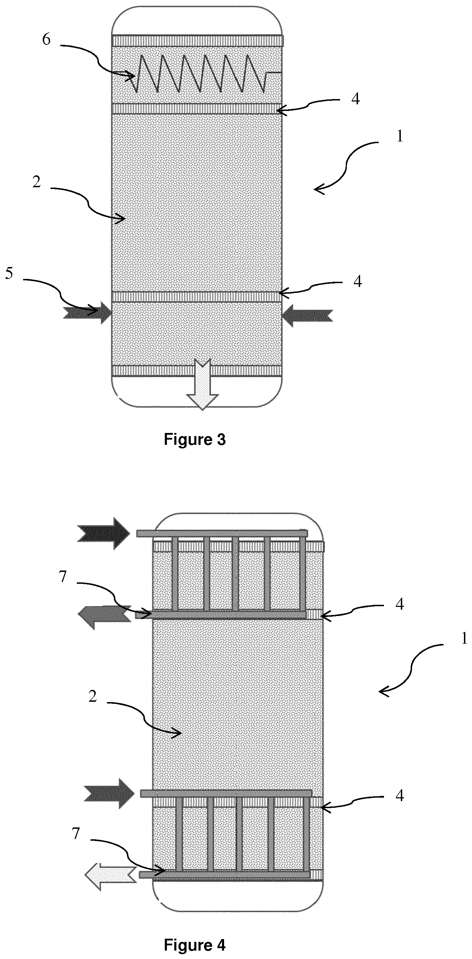

La figure 3 illustre, de manière non limitative, un système de stockage et de restitution de la chaleur 1 selon un deuxième mode de réalisation de l'invention. Le système de stockage 1 est formé d'une colonne verticale, qui comprend un lit fixe de particules 2. La colonne comprend par ailleurs, à ses deux extrémités, des moyens d'injection et de soutirage d'un fluide dans la colonne. Pour le « coté chaud » de la colonne (en haut de la colonne), les moyens de régulation thermique comprennent une résistance électrique 6, pour le chauffage des particules. En outre, la colonne comprend des moyens de circulation 5 d'un fluide thermique (c'est-à-dire différent du fluide à chauffer ou à refroidir), afin d'assurer la régulation thermique des particules du « côté froid » du lit de particules 2. Par exemple, un fluide thermique froid peut être injecté par des moyens de circulation 5 situés en périphérie de la colonne, à une petite distance du fond de la colonne, et peut être extrait de la colonne par des moyens d'injection et de soutirage en fond de la colonne. En outre, le lit de particules 2 comporte deux couches de matériau isolant thermique 4. Les couches 4 délimitent trois portions du lit de particules 2 : une première à l'extrémité supérieure du lit fixe délimitée par le haut de la colonne et une première couche d'isolant thermique 4, une deuxième au centre du lit fixe entre les deux couches d'isolant thermique 4, et une troisième à l'extrémité inférieure du lit fixe délimitée par une couche d'isolant thermique 4 et le fond de la colonne. Ces couches de matériau isolant thermique permettent d'isoler thermiquement les portions du lit de particules, dans lesquelles le chauffage et le refroidissement des particules sont prévus. Ainsi, il est possible de maintenir le gradient thermique souhaité.

Selon une variante du mode de réalisation, le système de stockage et de restitution de la chaleur peut comprendre aucune, ou une seule couche de matériau isolant thermique.

Par ailleurs, le lit fixe peut être remplacé par un lit mobile ou une pluralité de lits fluidisés.

La figure 4 illustre, de manière non limitative, un système de stockage et de restitution de la chaleur 1 selon un troisième mode de réalisation de l'invention. Le système de stockage 1 est formé d'une colonne verticale, qui comprend un lit fixe de particules 2. La colonne comprend par ailleurs, à ses deux extrémités, des moyens d'injection et de soutirage d'un fluide dans la colonne. En outre, la colonne comprend des échangeurs thermiques 7, afin d'assurer la régulation thermique des particules aux extrémités du lit de particules 2. Par exemple, un premier échangeur thermique 7 apportant de la chaleur peut être situé en haut de la colonne. De plus, un deuxième échangeur thermique, refroidissant les particules 2 peut être situé en fond de la colonne. En outre, le lit de particules 2 comporte deux couches de matériau isolant thermique 4. Les couches 4 délimitent trois portions du lit de particules 2 : une première à l'extrémité supérieure du lit fixe délimitée par le haut de la colonne et une première couche d'isolant thermique 4, une deuxième au centre du lit fixe entre les deux couches d'isolant thermique 4, et une troisième à l'extrémité inférieure du lit fixe délimitée par une couche d'isolant thermique 4 et le fond de la colonne. Ces couches de matériau isolant thermique permettent d'isoler thermiquement les portions du lit de particules, dans lesquelles le chauffage et le refroidissement des particules sont prévus. Ainsi, il est possible de maintenir le gradient thermique souhaité.

Selon une variante du mode de réalisation, le système de stockage et de restitution de la chaleur peut comprendre aucune, ou une seule couche de matériau isolant thermique.

Par ailleurs, le lit fixe peut être remplacé par un lit mobile ou une pluralité de lits fluidisés.

Les modes de réalisation des figures 2, 3 et 4 peuvent être combinés par association et/ou par remplacement, selon toutes combinaisons possibles. Par exemple, un système de stockage et de restitution de la chaleur peut comprendre du « côté chaud » à la fois une résistance électrique et des moyens de circulation d'un liquide thermique. Selon un autre exemple, le système de stockage et de restitution de la chaleur peut comprendre une résistance électrique du « côté chaud », et un échangeur de chaleur du « côté froid ».

Alternativement, le système de stockage et de restitution de la chaleur peut comprendre un système de type pompe à chaleur qui récupère l'énergie excédentaire du « côté froid » pour la restituer du « côté chaud ».

En outre, la présente invention concerne un système de stockage et de récupération d'énergie par gaz comprimé équipé d'un moyen de stockage de la chaleur (par exemple du type AACAES). Dans cette mise en œuvre, le gaz sous pression (souvent de l'air) est stocké froid. Le système de stockage et de récupération d'énergie selon l'invention comporte :
- au moins un moyen de compression de gaz (ou compresseur), et de préférence plusieurs moyens de compression de gaz étagés. Le moyen de compression de gaz peut être entraîné par un moteur, notamment un moteur électrique ;
- au moins un moyen de stockage du gaz comprimé (appelé également réservoir) par le moyen de compression du gaz. Le moyen de stockage du gaz comprimé peut être un réservoir naturel (par exemple une cavité souterraine) ou non. Le moyen de stockage du gaz comprimé peut être en surface ou en sous-sol. De plus, il peut être formé d'un unique volume ou d'une pluralité de volumes connectés entre eux ou non ;
- au moins un moyen de détente du gaz (appelé également détendeur ou turbine), permettant de détendre le gaz comprimé et stocké, et de préférence plusieurs moyens de détente de gaz étagés. Le moyen de détente du gaz permet de générer une énergie, notamment une énergie électrique au moyen d'un générateur ;
- au moins un système de stockage et de restitution de la chaleur, permettant le stockage de la chaleur issue du gaz comprimé lors de la phase de stockage d'énergie, et permettant la restitution de la chaleur stockée au gaz comprimé lors de la phase de la restitution d'énergie, le système de stockage et de restitution de la chaleur est, de préférence, placé en sortie des moyens de compression et en entrée des moyens de détente. Selon l'invention, le système d'échange de la chaleur comprend des particules solides de stockage de la chaleur. Ces particules solides échangent de la chaleur avec le gaz lors des phases de stockage et de restitution d'énergie, cette chaleur étant stockée dans les particules entre ces deux phases. Selon l'invention, les systèmes de stockage de la chaleur sont conformes à l'une des variantes de réalisation décrites précédemment, ou à l'une des combinaisons des variantes précédemment décrites.

On utilise les termes « moyens de compression étagés » (respectivement « moyens de détente étagés »), lorsque une pluralité de moyens de compression (respectivement de détente) sont montés successivement les uns après les autres en série : le gaz comprimé (respectivement détendu) en sortie du premier moyen de compression (respectivement de détente) passe ensuite dans un deuxième moyen de compression (respectivement de détente) et ainsi de suite. On appelle alors un étage de compression ou de détente, un moyen de compression ou de détente de la pluralité de moyens de compression ou de détente étagés. Avantageusement, lorsque le système comporte une pluralité d'étages de compression et/ou de détente, un système d'échange de chaleur est disposé entre chaque étage de compression et/ou de détente. Ainsi, le gaz comprimé est refroidi entre chaque compression, ce qui permet d'optimiser le rendement de la compression suivante, et le gaz détendu est chauffé entre chaque détente, ce qui permet d'optimiser le rendement de la détente suivante. Le nombre d'étages de compression et le nombre d'étages de détente peuvent être compris entre 2 et 10, de préférence entre 3 et 5. De préférence, le nombre d'étages de compression est identique au nombre d'étages de détente. Alternativement, le système de stockage et de récupération d'énergie par gaz comprimé (par exemple de type AACAES) selon l'invention peut contenir un seul moyen de compression et un seul moyen de détente.

Selon une variante de réalisation de l'invention, les moyens de compression, étagés ou non, peuvent être réversibles, c'est-à-dire qu'ils peuvent fonctionner à la fois pour la compression et pour la détente. Ainsi, il est possible de limiter le nombre de dispositifs utilisés dans le système selon l'invention, ce qui permet un gain en poids et en volume du système selon l'invention.

Le système selon l'invention est adapté à tout type de gaz, notamment pour l'air. Dans ce cas, l'air en entrée utilisé pour la compression peut être prélevé de l'air ambiant, et l'air en sortie après la détente peut être relâché dans l'air ambiant. Dans la suite de la description, seule la variante de réalisation avec de l'air comprimé, et son application AACAES seront décrites. Toutefois, le système et le procédé de stockage d'énergie par gaz comprimé sont valables pour tout autre gaz.

La figure 8 illustre un exemple de réalisation non limitatif d'un système AACAES selon l'invention. Sur cette figure, les flèches en trait continu illustrent la circulation du gaz lors des étapes de compression (stockage d'énergie), et les flèches en pointillés illustrent la circulation du gaz lors des étapes de détente (restitution d'énergie). Cette figure illustre un système AACAES comprenant un seul étage de compression 12, un seul étage de détente 14 et un système de stockage et de restitution de la chaleur 1. Le système comporte un réservoir de stockage 13 du gaz comprimé. Le système de stockage et de restitution de la chaleur 1 est intercalé entre l'étage de compression/détente 12 ou 14 et le réservoir de stockage 13 du gaz comprimé. Classiquement, en phase de stockage d'énergie (compression), l'air est d'abord comprimé dans le compresseur 12, puis refroidi dans le système de stockage de la chaleur 1. Le gaz comprimé et refroidi est stocké dans le réservoir 13. Les particules de stockage de la chaleur du système de stockage de la chaleur 1 sont chaudes suite au refroidissement du gaz comprimé dans la phase de compression. Lors de la récupération de l'énergie (détente), le gaz comprimé stocké est chauffé dans le système de stockage et de restitution de la chaleur 1. Ensuite, de manière classique, le gaz passe au travers d'un ou plusieurs étages de détente 14 (un étage selon l'exemple illustré en figure 1).

Le système de stockage et de récupération d'énergie par gaz comprimé selon l'invention n'est pas limité à l'exemple de la figure 8. D'autres configurations peuvent être envisagées : un nombre différent d'étages de compression et/ou de détente, l'utilisation de moyens réversibles assurant la compression et la détente, etc.

Alternativement, le système de stockage et de récupération de la chaleur selon l'invention peut être utilisé pour tout type d'utilisation nécessitant le stockage de la chaleur, notamment pour le stockage d'énergie solaire, éolienne, ou pour tout type d'industrie par exemple la métallurgie, etc.

De plus, la présente invention concerne un procédé de stockage de la chaleur, dans lequel on réalise les étapes suivantes :
a) on fait circuler un fluide à refroidir dans un lit de particules de stockage de la chaleur ; et
b) on stocke une partie de la chaleur du fluide dans les particules, et on régule la température des particules à au moins une extrémité du lit de particules, par exemple en chauffant les particules situées à l'extrémité du lit de particule, par laquelle le fluide est sorti (« côté froid »).

Le procédé de stockage de chaleur selon l'invention peut comprendre également les étapes suivantes seules ou en combinaison :
- on régule la température en chauffant les particules du côté du lit, par lequel entre le fluide chaud à refroidir, et en refroidissant les particules du côté du lit, par lequel sort le fluide refroidi,
- on régule la température en faisant circuler un fluide thermique dans une portion du lit de particules,
- on régule la température en alimentant une résistance électrique,
- on régule la température au moyen d'un échange thermique,
- on régule la température au moyen d'un système de pompe à chaleur.

Selon une variante de réalisation de ce procédé, lors de l'étape a), de préférence à la fin de l'étape a), on régule la température du « côté chaud » du lit de particules. De préférence, on régule la température par chauffage des particules du « côté froid ».

Le procédé de stockage de la chaleur peut être réalisé avec l'une des variantes de réalisation du système de stockage et de restitution de la chaleur décrites précédemment, ou l'une des combinaisons des variantes précédemment décrites. Notamment, le lit peut être un lit fixe, mobile, ou fluidisé, les particules peuvent comprendre des matériaux à changement de phase, les moyens de régulation thermique peuvent comprendre une pompe de chaleur, une résistance électrique, un échangeur de chaleur et/ou des moyens de circulation d'un fluide thermique.

En outre, la présente invention concerne un procédé de restitution de la chaleur, dans lequel on réalise les étapes suivantes :
a) on stocke une partie de la chaleur dans des particules, et on régule la température des particules à au moins une extrémité du lit de particules; et
b) on fait circuler un fluide à chauffer dans le lit de particules pour restituer la chaleur au fluide.

Le procédé de restitution de la chaleur selon l'invention peut comprendre également les étapes suivantes seules ou en combinaison :
- on régule la température en chauffant les particules du côté du lit, par lequel entre le fluide froid à chauffer, et en refroidissant les particules du côté du lit, par lequel sort le fluide chauffé,
- on régule la température en faisant circuler un fluide thermique dans une portion du lit de particules,
- on régule la température en alimentant une résistance électrique,
- on régule la température au moyen d'un échange thermique,
- on régule la température au moyen d'un système de pompe à chaleur.

Selon une variante de réalisation de ce procédé, lors de l'étape b), de préférence à la fin de l'étape b) et après l'étape b), on peut réguler la température du « côté chaud » du lit de particules. De préférence, on régule la température par refroidissement des particules du « côté chaud ».

Le procédé de restitution de la chaleur peut être réalisé avec l'une des variantes de réalisation du système de stockage et de restitution de la chaleur décrites précédemment, ou l'une des combinaisons des variantes précédemment décrites. Notamment, le lit peut être un lit fixe, mobile, ou fluidisé, les particules peuvent comprendre des matériaux à changement de phase, les moyens de régulation thermique peuvent comprendre une pompe de chaleur, une résistance électrique, un échangeur de chaleur et/ou des moyens de circulation d'un fluide thermique.

L'invention concerne aussi un procédé de stockage et de restitution de la chaleur qui est formé de la succession des étapes du procédé de stockage de la chaleur et du procédé de restitution de la chaleur.

On appelle alors cycle cette succession de quatre étapes :
1) charge (refroidissement du fluide),
2) stockage et régulation thermique,
3) décharge (chauffage du fluide), et
4) attente et éventuellement régulation thermique.

La figure 5 illustre, de manière non limitative, ces quatre étapes du cycle CY selon l'invention. La figure 5 illustre une courbe du débit D en fonction du temps. Lors de la première étape de charge CH, le fluide circule dans un premier sens dans le lit, ce qui par convention est indiqué par un débit positif. Lors de la deuxième étape, la chaleur est stockée ST, sans passage de fluide. Pendant cette étape de stockage ST, une régulation thermique QE est mise en œuvre. Ensuite, une étape de décharge DE est réalisée, le fluide circule alors en sens inverse par rapport au premier sens de l'étape de charge, ce qui est indiqué par un débit négatif. Puis une étape d'attente AT avec une régulation thermique QE est mise œuvre, sans passage de fluide. L'étape d'attente se termine avec le début d'un nouveau cycle CY.

Selon un mode de réalisation de l'invention, la régulation thermique peut également être réalisée lors des étapes de charge et décharge, de préférence à la fin des étapes de charge et décharge.

Par exemple, pendant la charge, on peut réguler la température du « côté froid » du lit de particules, de préférence, par chauffage des particules du « côté froid », et, pendant la décharge, on peut réguler la température du « côté chaud » du lit de particules, de préférence, par refroidissement des particules du « côté chaud ».

La présente invention concerne également un procédé de stockage et de récupération d'énergie par gaz comprimé, dans lequel on réalise les étapes suivantes :
a) on comprime un gaz, notamment au moyen d'un compresseur ;
b) on refroidit le gaz comprimé par échange de chaleur, dans un système de stockage et de restitution de la chaleur selon l'invention ;
c) on stocke le gaz comprimé refroidi, notamment par un moyen de stockage de gaz comprimé ;
d) on chauffe le gaz comprimé stocké, par échange de chaleur, dans le système de stockage et de restitution de la chaleur selon l'invention ; et
e) on détend le gaz comprimé chauffé pour générer une énergie, par exemple au moyen d'une turbine pour générer une énergie électrique.

Selon l'invention, l'échange de chaleur entre le gaz et les particules est réalisé avec une régulation thermique des extrémités du lit de particules du système de stockage et de restitution de la chaleur. Ainsi, le stockage et la restitution d'énergie du procédé de type AACAES sont optimisés.

Selon une mise en œuvre de ce procédé, on régule la température du lit de particules, en chauffant les particules à l'extrémité du lit de particules par laquelle le gaz est entré, et en refroidissant les particules à l'extrémité du lit fixe par laquelle le gaz est sorti.

Le procédé de de stockage et de récupération d'énergie par gaz comprimé peut être réalisé avec l'une des variantes de réalisation du système de stockage et de restitution de la chaleur décrites précédemment, ou l'une des combinaisons des variantes précédemment décrites. Notamment, le lit peut être un lit fixe, mobile, ou fluidisé, les particules peuvent comprendre des matériaux à changement de phase, les moyens de régulation thermique peuvent comprendre une pompe de chaleur, une résistance électrique, un échangeur de chaleur et/ou des moyens de circulation d'un fluide thermique.

Selon un aspect de l'invention, le procédé comporte plusieurs étapes de compression successives, au moyen de compresseurs placés en série, également appelés compressions étagées. Dans ce cas, on réitère les étapes a) et b) pour chaque étage de compression. Ainsi, le gaz est comprimé et refroidi plusieurs fois.

Selon une caractéristique de l'invention, le procédé comporte plusieurs étapes de détente successives, par des moyens de détente placés en série, également appelés détentes étagées. Dans ce cas, on réitère les étapes d) et e) pour chaque étage de détente. Ainsi, le gaz est chauffé et détendu plusieurs fois.

L'étape a) concerne la compression d'un gaz, par exemple de l'air. Il peut s'agit notamment d'air prélevé dans le milieu ambiant.

L'étape b) permet de refroidir le gaz comprimé après chaque étape de compression, ce qui permet d'optimiser le rendement de la compression suivante et/ou le stockage d'énergie. Le système de stockage de la chaleur permet, lors du stockage du gaz comprimé (compression), de récupérer un maximum de chaleur issue de la compression du gaz en sortie des compresseurs et de diminuer la température du gaz avant le passage à la compression suivante ou avant le stockage. Par exemple, le gaz comprimé peut passer d'une température supérieure à 150 °C, par exemple environ 190 °C à une température inférieure à 80 °C, par exemple environ 50 °C.

L'étape c) peut être réalisée au sein d'un moyen de stockage du gaz comprimé, qui peut être un réservoir naturel ou non (par exemple une cavité souterraine). Le moyen de stockage du gaz comprimé peut être en surface ou en sous-sol. De plus, il peut être formé d'un unique volume ou d'une pluralité de volumes connectés entre eux ou non. Lors du stockage, on ferme le moyen de stockage du gaz comprimé.

Le gaz comprimé est stocké jusqu'au moment où on souhaite récupérer l'énergie stockée. L'étape d) et les suivantes sont réalisées au moment où on souhaite récupérer l'énergie stockée.

L'étape d) permet de chauffer l'air comprimé avant chaque détente, ce qui permet d'optimiser le rendement de la détente suivante. Pour l'étape d), on peut utiliser les particules de stockage de la chaleur qui ont servi à refroidir lors de l'étape b). Les moyens de stockage de la chaleur permettent, lors de la restitution de l'énergie, de restituer un maximum de chaleur stockée en augmentant la température du gaz avant le passage à la détente suivante. Par exemple, le gaz peut passer d'une température inférieure à 80 °C, par exemple environ 50 °C, à une température supérieure à 150 °C, par exemple environ 180 °C.

Lors de l'étape e), le gaz comprimé est détendu. La détente du gaz comprimé permet de générer une énergie. Cette détente peut être réalisée au moyen d'une turbine qui génère une énergie électrique. Si le gaz est de l'air, l'air détendu peut être évacué dans le milieu ambiant.

Le procédé et le système de stockage et récupération d'énergie par gaz comprimé selon l'invention peuvent être utilisés pour le stockage d'une énergie intermittente, telle que l'énergie éolienne ou solaire, afin de pouvoir utiliser cette énergie au moment désiré.

## Revendications

1. Système de stockage et de restitution de la chaleur comprenant au moins un lit de particules (2) de stockage de la chaleur, et des moyens d'injection et de soutirage (3) d'un fluide dans ledit au moins un lit de particules (2), **caractérisé en ce que** ledit système de stockage et de restitution de la chaleur (1) comporte à chaque extrémité dudit au moins un lit de particules (2) un moyen de régulation thermique desdites particules (2).

2. Système selon la revendication 1, dans lequel ledit système de stockage comporte un premier moyen de régulation thermique apte à chauffer lesdites particules (2) à une première extrémité dudit au moins un lit de particules (2), et un deuxième moyen de régulation thermique apte à refroidir lesdites particules (2) à une deuxième extrémité dudit au moins un lit de particules (2).

3. Système selon l'une des revendications précédentes, dans lequel ledit moyen de régulation thermique comporte des moyens de chauffage et/ou de refroidissement desdites particules (2).

4. Système selon les revendications 2 et 3, dans lequel lesdits moyens de chauffage et lesdits moyens de refroidissement des premier et deuxième moyens de régulation thermique sont reliés au moyen d'un dispositif de pompe à chaleur.

5. Système selon la revendication 3, dans lequel lesdits moyens de chauffage et/ou de refroidissement desdites particules (2) comprennent un échangeur de chaleur (7) et/ou une résistance électrique (6) et/ou des moyens de circulation d'un fluide thermique (5).

6. Système selon l'une des revendications 3 ou 5, dans lequel lesdits moyens de chauffage et/ou de refroidissement sont situés au sein dudit au moins un lit de particules (2).

7. Système selon l'une des revendications 3 ou 5, dans lequel lesdits moyens de chauffage et/ou de refroidissement sont situés en périphérie dudit au moins un lit de particules (2).

8. Système selon l'une des revendications précédentes, dans lequel ledit lit fixe comporte une couche (4) de matériau isolant thermique, au sein dudit au moins un lit de particules (2), délimitant ledit moyen de régulation thermique.

9. Système selon l'une des revendications précédentes, dans lequel ledit système de stockage et de restitution de la chaleur (1) comporte des moyens de mesure de la température desdites particules (2).

10. Système selon l'une des revendications précédentes, dans lequel ledit fluide est un gaz, notamment de l'air.

11. Système selon l'une des revendications précédentes, dans lequel lesdites particules (2) sont des particules de matériau à changement de phase.

12. Système de stockage et de récupération d'énergie par gaz comprimé comportant au moins un moyen de compression du gaz (12), au moins un moyen de stockage de gaz comprimé (13), au moins un moyen de détente (14) dudit gaz comprimé pour générer une énergie, et au moins un système de stockage et de restitution de la chaleur (1) selon l'une des revendications précédentes.

13. Procédé de stockage de chaleur, **caractérisé en ce qu'**il comporte les étapes suivantes :
a) on fait circuler un fluide dans un lit de particules (2) de stockage de la chaleur d'un système de stockage et de restitution de la chaleur (1) selon l'une des revendications 1 à 11 ; et
b) on stocke une partie de la chaleur dudit fluide dans lesdites particules (2), et on régule la température desdites particules (2) à au moins une extrémité dudit lit de particules (2).

14. Procédé de restitution de la chaleur, **caractérisé en ce qu'**il comporte les étapes suivantes :
a) on stocke de la chaleur dans un lit de particules (2) de stockage de la chaleur d'un système de stockage et de restitution de la chaleur (1) selon l'une des revendications 1 à 11, en régulant la température desdites particules (2) à au moins une extrémité dudit lit de particules (2) ; et
b) on fait circuler un fluide dans ledit lit de particules (2) pour restituer ladite chaleur desdites particules (2) audit fluide.

15. Procédé de stockage et de récupération d'énergie par gaz comprimé, **caractérisé en ce qu'**il comprend les étapes suivantes au moyen d'un système de stockage et de récupération d'énergie par gaz comprimé selon la revendication 12 :
a) on comprime un gaz ;
b) on refroidit un gaz dans un système de stockage et de restitution de la chaleur (1);
c) on stocke ledit gaz refroidi ;
d) on chauffe ledit gaz refroidi dans ledit système de stockage et de restitution de la chaleur (1) ; et
e) on détend ledit gaz comprimé chauffé pour générer une énergie.

16. Procédé selon la revendication 15, dans lequel entre les étapes de refroidissement du gaz et de chauffage du gaz, on régule la température à au moins une extrémité dudit lit de particules (2).

17. Procédé selon la revendication 16, dans lequel, à l'étape b), on régule la température de dudit lit de particules (2) en chauffant lesdites particules (2) à l'extrémité dudit lit de particules (2) par laquelle ledit gaz est sorti.

18. Procédé selon l'une des revendications 16 ou 17, dans lequel, à l'étape d), on régule la température dudit lit de particules (2) en refroidissant lesdites particules (2) à l'extrémité dudit lit de particules (2) par laquelle ledit gaz est sorti.

## Patentansprüche

1. System zur Wärmespeicherung und -abgabe, umfassend mindestens ein Teilchenbett (2) zur Wärmespeicherung und Einspritz- und Entnahmemittel (3) eines Fluids in das bzw. aus dem mindestens einen Teilchenbett (2), **dadurch gekennzeichnet, dass** das System zur Wärmespeicherung und -abgabe (1) an jedem Ende des mindestens einen Teilchenbetts (2) ein Mittel zur thermischen Regulierung der Teilchen (2) umfasst.

2. System nach Anspruch 1, wobei das Speicherungssystem ein erstes Mittel zur thermischen Regulierung, das geeignet ist, die Teilchen (2) an einem ersten Ende des mindestens einen Teilchenbetts (2) zu erhitzen, und ein zweites Mittel zur thermischen Regulierung umfasst, das geeignet ist, die Teilchen (2) an einem zweiten Ende des mindestens einen Teilchenbetts (2) abzukühlen.

3. System nach einem der vorhergehenden Ansprüche, bei dem das Mittel zur thermischen Regulierung Heiz- und/oder Kühlmittel der Teilchen (2) umfasst.

4. System nach den Ansprüchen 2 und 3, bei dem die Heizmittel und die Kühlmittel der ersten und zweiten Mittel zur thermischen Regulierung mit Hilfe einer Wärmepumpenvorrichtung verbunden sind.

5. System nach Anspruch 3, bei dem die Heiz- und/oder Kühlmittel der Teilchen (2) einen Wärmetauscher (7) und/oder einen elektrischen Widerstand (6) und/oder Umwälzmittel eines Thermofluids (5) umfassen.

6. System nach einem der Ansprüche 3 oder 5, bei dem die Heiz- und/oder Kühlmittel innerhalb des mindestens einen Teilchenbetts (2) angeordnet sind.

7. System nach einem der Ansprüche 3 oder 5, bei dem die Heiz- und/oder Kühlmittel an der Peripherie des mindestens einen Teilchenbetts (2) angeordnet sind.

8. System nach einem der vorhergehenden Ansprüche, bei dem das Festbett eine Schicht (4) aus thermisch isolierendem Material innerhalb des mindestens einen Teilchenbetts (2) umfasst, die das Mittel zur thermischen Regulierung begrenzt.

9. System nach einem der vorhergehenden Ansprüche, wobei das System zur Wärmespeicherung und -abgabe (1) Mittel zum Messen der Temperatur der Teilchen (2) umfasst.

10. System nach einem der vorhergehenden Ansprüche, bei dem das Fluid ein Gas, insbesondere Luft, ist.

11. System nach einem der vorhergehenden Ansprüche, bei dem die Teilchen (2) Teilchen aus einem Material mit Phasenwechsel sind.

12. System zur Speicherung und Wiedergewinnung von Energie durch komprimiertes Gas, umfassend mindestens ein Kompressionsmittel des Gases (12), mindestens ein Speichermittel von komprimiertem Gas (13), mindestens ein Druckminderungsmittel (14) des komprimierten Gases, um Energie zu erzeugen, und mindestens ein System zur Wärmespeicherung und -abgabe (1) nach einem der vorhergehenden Ansprüche.

13. Verfahren zur Wärmespeicherung, **dadurch gekennzeichnet, dass** es die folgenden Schritte umfasst:
a) Umwälzen eines Fluids in einem Teilchenbett (2) zur Speicherung der Wärme eines Systems zur Wärmespeicherung- und -abgabe (1) nach einem der Ansprüche 1 bis 11; und
b) Speichern eines Teils der Wärme des Fluids in den Teilchen (2) und Regulieren der Temperatur der Teilchen (2) an mindestens einem Ende des Teilchenbetts (2).

14. Verfahren zur Wärmeabgabe, **dadurch gekennzeichnet, dass** es die folgenden Schritte umfasst:
a) Speichern der Wärme in einem Teilchenbett (2) zur Speicherung der Wärme eines Systems zur Wärmespeicherung und -abgabe (1) nach einem der Ansprüche 1 bis 11, wobei die Temperatur der Teilchen (2) an mindestens einem Ende des Teilchenbetts (2) reguliert wird; und
b) Umwälzen eines Fluids in dem Teilchenbett (2), um die Wärme der Teilchen (2) an das Fluid abzugeben.

15. System zur Speicherung und Wiedergewinnung von Energie durch komprimiertes Gas, **dadurch gekennzeichnet, dass** es die folgenden Schritte mit Hilfe eines Systems zur Speicherung und Wiedergewinnung von Energie durch komprimiertes Gas nach Anspruch 12 umfasst:
a) Komprimieren eines Gases;
b) Abkühlen eines Gases in einem System zur Wärmespeicherung und -abgabe (1);
c) Speichern des abgekühlten Gases;
d) Erhitzen des abgekühlten Gases in dem System zur Wärmespeicherung und -abgabe (1); und
e) Mindern des Drucks des erhitzten komprimierten Gases, um Energie zu erzeugen.

16. Verfahren nach Anspruch 15, bei dem zwischen den Schritten des Abkühlens des Gases und des Erhitzens des Gases die Temperatur an mindestens einem Ende des Teilchenbetts (2) reguliert wird.

17. Verfahren nach Anspruch 16, bei dem in Schritt b) die Temperatur des Teilchenbetts (2) reguliert wird, wobei die Teilchen (2) an dem Ende des Teilchenbetts (2) erhitzt werden, über das das Gas ausgetreten ist.

18. Verfahren nach einem der Ansprüche 16 oder 17, bei dem in Schritt d) die Temperatur des Teilchenbetts (2) reguliert wird, wobei die Teilchen (2) an dem Ende des Teilchenbetts (2) abgekühlt werden, über das das Gas ausgetreten ist.

## Claims

1. System for storing and releasing heat comprising at least one bed of particles (2) for storing the heat, and means for injecting and withdrawing (3) a fluid in said at least one bed of particles (2), **characterized in that** said heat storage and release system (1) comprises, at each end of said at least one bed of particles (2), a means for thermal regulation of said particles (2).

2. System according to Claim 1, in which said storage system comprises a first thermal regulation means that is able to heat said particles (2) at a first end of said at least one bed of particles (2), and a second thermal regulation means that is able to cool said particles (2) at a second end of said at least one bed of particles (2).

3. System according to either of the preceding claims, in which said thermal regulation means comprises means for heating and/or cooling said particles (2) .

4. System according to Claims 2 and 3, in which said heating means and said cooling means of the first and second thermal regulation means are connected by means of a heat pump device.

5. System according to Claim 3, in which said means for heating and/or cooling said particles (2) comprise a heat exchanger (7) and/or an electrical resistor (6) and/or means for circulating a thermal fluid (5).

6. System according to either of Claims 3 and 5, in which said means for heating and/or cooling are located within said at least one bed of particles (2) .

7. System according to either of Claims 3 and 5, in which said means for heating and/or cooling are located at the periphery of said at least one bed of particles (2).

8. System according to one of the preceding claims, in which said fixed bed comprises a layer (4) of the thermally insulating material within said at least one bed of particles (2), delimiting said thermal regulation means.

9. System according to one of the preceding claims, in which said heat storage and release system (1) comprises means for measuring the temperature of said particles (2).

10. System according to one of the preceding claims, in which said fluid is a gas, in particular air.

11. System according to one of the preceding claims, in which said particles (2) are particles of phase-change material.

12. System for storing and recovering energy using compressed gas, comprising at least one means for compressing the gas (12), at least one means for storing compressed gas (13), at least one means (14) for expanding said compressed gas in order to generate energy, and at least one heat storage and release system (1) according to one of the preceding claims.

13. Method for storing heat, **characterized in that** it comprises the following steps:
a) making a fluid circulate in a bed of heat storage particles (2) of a heat storage and release system (1) according to one of Claims 1 to 11; and
b) storing some of the heat of said fluid in said particles (2), and regulating the temperature of said particles (2) at at least one end of said bed of particles (2).

14. Method for releasing heat, **characterized in that** it comprises the following steps:
a) storing heat in a bed of heat storage particles (2) of a heat storage and release system (1) according to one of Claims 1 to 11, regulating the temperature of said particles (2) at at least one end of said bed of particles (2); and
b) making a fluid circulate in said bed of particles (2) in order to release said heat from said particles (2) to said fluid.

15. Method for storing and recovering energy using compressed gas, **characterized in that** it comprises the following steps by means of a system for storing and recovering energy using compressed gas according to Claim 12:
a) compressing a gas;
b) cooling a gas in a heat storage and release system (1);
c) storing said cooled gas;
d) heating said cooled gas in said heat storage and release system (1); and
e) expanding said heated compressed gas in order to generate energy.

16. Method according to Claim 15, in which, between the steps of cooling the gas and heating the gas, the temperature is regulated at at least one end of said bed of particles (2).

17. Method according to Claim 16, in which, in step b), the temperature of said bed of particles (2) is regulated by heating said particles (2) at that end of said bed of particles (2) via which said gas has exited.

18. Method according to either of Claims 16 and 17, in which, in step d), the temperature of said bed of particles (2) is regulated by cooling said particles (2) at that end of said bed of particles (2) via which said gas has exited.
